# EUROPÄISCHE PATENTSCHRIFT

(11) **EP 2 516 064 B1**
(45) Veröffentlichungstag und Bekanntmachung des Hinweises auf die Patenterteilung: **01.07.2015**
(21) Anmeldenummer: 10812978.4
(22) Anmeldetag: 23.12.2010
(51) Int. Cl.: B02C 19/18, B29B 17/04

(54) **VERFAHREN ZUM ZERKLEINERN ELASTOMERER UND THERMOPLASTISCHER FESTSTOFFE FÜR DIE WIEDERVERWERTUNG**
METHOD FOR GRINDING ELASTOMER AND THERMOPLASTIC SOLIDS FOR RECYCLING
PROCÉDÉ DE BROYAGE DE MATIÈRES SOLIDES ÉLASTOMÈRES ET THERMOPLASTIQUES EN VUE DE LEUR RECYCLAGE

(30) Priorität: 23.12.2009 DE 102009060560
(43) Veröffentlichungstag der Anmeldung: 31.10.2012
(73) Patentinhaber: HLW, Hoch Leistungs Werkstoffe GmbH, 30539 Hannover (DE)
(72) Erfinder: BECKMANN, Jörg, 31139 Hildesheim (DE); SCHUSTER, Robert, Hans, 30519 Hannover (DE)
(74) Vertreter: Lins, Edgar
(86) Internationale Anmeldenummer: PCT/DE2010/001512
(87) Internationale Veröffentlichungsnummer: WO 2011/076192

(56) Entgegenhaltungen:
- DE-A1- 19 534 232
- DE-A1-102008 012 539
- DE-C1- 19 543 914
- US-A- 5 758 831

## Beschreibung

Die Erfindung betrifft ein Verfahren zum Zerkleinern elastomerer, speziell gummielastischer und thermoplastischer Feststoffe in Form von Stückgut auch im Verbund mit anderen Materialien, die der stofflichen Wiederverwertung zugeführt werden sollen. Unter dem Sammelbegriff "Stückgut" werden im Folgenden sowohl grob geschredderte oder gemahlene Teile aus Feststoffen oder Kompositmaterialien verstanden als auch kleinere ganze Bauteile. Auch können mehrere Stückgutarten als gemischtes Ausgangsmaterial vorliegen.

Noch immer werden viele Gebraucht- bzw. Abfallstoffe nicht wiederverwertet. Die Verbrennung und die unsortierte Endlagerung von Gebrauchtteilen bergen große umwelttechnische Probleme. Außerdem sollten wertvolle, insbesondere erdölbasierte Rohstoffe zurück gewonnen und in den Materialkreislauf wieder eingeführt werden. Dies betrifft auch die heute in großer Menge anfallenden gebrauchten Elastomer- und Thermoplastbauteile wie Reifen, Dichtungen, Profile, Motorlager, Schläuche und Membranen, die aus dem Nutzungskreislauf gezogen werden. Aufgrund ihrer irreversiblen Vernetzung lassen sich gebrauchte Elastomerbauteile (Altgummi) allerdings nur in sehr begrenztem Maße und mit nicht befriedigenden Leistungsergebnissen wieder in den Stoffkreislauf einführen. Die Aufbereitung von Altgummi mit den bekannten Mahlverfahren ergibt nur grobe Mehlpartikel, die für den Einsatz in anspruchsvollen und wettbewerbsfähigen Elastomerbauteilen, thermoplastischen Elastomeren oder in Thermoplasten als Füllmaterial weniger oder nicht geeignet sind.

Ein Verfahren, mit dem relativ feine Bruchstücke erhalten werden ist die Schockwellenzertrümmerung. Aus der DE 195 34 232 C2 ist eine grundlegende Apparatur für ein vom Forschungszentrum Karlsruhe entwickeltes Konzept zur Zertrümmerung von im Wesentlichen nichtmetallischen Festkörpern, wie zum Beispiel mineralischen Feststoffen bekannt. Die Schockwellen werden durch schnelle Entladung eines elektrischen Energiespeichers ausgelöst. Das zu zerkleinernde Gut befindet sich dabei in einer nicht oder nur schwach leitenden Prozessflüssigkeit.

Die US 5 758 831 A beschreibt eine Weiterentwicklung eines solchen Verfahrens für Partikel, die auf Grund ihrer Elastizität den Schockwellen zu gut standhalten würden. Gemäß der DE 195 34 232 C2 besteht das Reaktionsgefäß, in dem das Schockwellenverfahren durchgeführt wird, aus einem schlagzähen Kunststoff, der die Stöße bei den Entladungen abfangen kann. Hieraus folgt, dass beispielsweise schlagzähe Kunststoffe, aber auch elastische Stoffe wie Gummi durch das Verfahren nicht oder nur mit sehr unbefriedigendem Ergebnis zertrümmert werden können. Für diese standhaltenden Materialien wie Plastik, Polymere, Harze, Gummi, Holzspäne und andere ist gemäß der Lehre der US 5 758 831 vorgesehen, dass sie bei tiefen, diese Materialien versprödenden Temperaturen behandelt werden. Als Tieftemperatur-Prozessflüssigkeit ist vorrangig flüssiger Stickstoff vorgesehen. Die Versprödung in der Kälte macht die an sich elastischen und weichen Materialien hart und brüchig, so dass sie zertrümmert werden können.

Die Aufgabe der Erfindung besteht nun darin, elastomere und thermoplastische Materialien, unter den elastomeren insbesondere gummielastische Materialien, speziell Altgummi, auch im Verbund mit anderen Stoffen, mit einem energieeffizienten Verfahren besonders fein und mit definierter Korngrößenverteilung zerteilen zu können. Angestrebt wird eine Korngröße von 100 nm bis 30 µm. Gleichzeitig ist auf eine gute Wiederverwertbarkeit der erhaltenen Teilchen zu achten.

Der Erfindung liegt der Gedanke zugrunde, die Struktur des Materials vorab so zu konditionieren, dass eine effektivere, gleichmäßigere und feinere Zerteilung ermöglicht wird. In den Altstoffen vorhandene Schadstoffe sollten innerhalb des Verfahrens beseitigt werden.

Die Aufgabe wird gelöst mit einem Verfahren zum Zerkleinern elastomerer und thermoplastischer Feststoffe in Form von Stückgut, auch im Verbund mit anderen Materialien, bei welchem das Stückgut einer Extraktion mit überkritischem Kohlendioxid unterzogen wird, und das so behandelte Stückgut anschließend einer Schockwellenbehandlung mit durch Hochspannung ausgelösten Schockwellen in fluidem dielektrischen Medium unterzogen wird, wobei das Medium (die Prozessflüssigkeit) eine elektrisch nicht oder nur schwach leitende organische Flüssigkeit mit Fp. unter -20 °C oder Wasser oder überkritisches Kohlendioxid ist.

Das Verfahren kann diskontinuierlich, d.h. im Batch-Betrieb, kontinuierlich oder halbkontinuierlich durchgeführt werden.

Bei diskontinuierlichem Betrieb wird zunächst eine Extraktion einer bestimmten Menge des Ausgangsmaterials in einem Extraktor mit flüssigem Kohlendioxid unter Druck, d.h. mit überkritischem Kohlendioxid, durchgeführt und das Material wird anschließend in einen Reaktor für die Schockwellenbehandlung überführt. Nach der Schockwellenbehandlung wird das Verfahrensprodukt, nämlich das zerkleinerte Feststoffmehl, entnommen und von der Prozessflüssigkeit getrennt oder in dieser weiterbehandelt, gelagert oder für die Verwendung oder Weiterverwertung transportiert.

Bei kontinuierlicher Verfahrensführung wird Ausgangsmaterial kontinuierlich einem hierfür ausgelegten Extraktor, beispielsweise einem Gegenstromextraktor, zugeführt, kontinuierlich abgenommen und durch den Reaktionsraum einer Schockwellenaniage geführt, wie beispielsweise in der US 5 758 831 bereits dargestellt. Beide Verfahrensweisen können verbunden werden, zum Beispiel, indem größere Chargen einheitlicher Ausgangsmaterialien in einer für kontinuierlichen Betrieb ausgelegten Anlage nacheinander und getrennt behandelt werden.

Vorrichtungen für die Behandlung von Materialien mit elektrisch gezündeten Schockwellen oder, anders ausgedrückt, Verfahren für die elektrohydraulische Zertrümmerung sind unter anderem aber nicht allein aus den genannten Schriften DE 195 34 232 C2 und US 5 758 831 bekannt. Derartige Vorrichtungen können für das Verfahren nach der Erfindung verwendet werden.

Die Extraktion von Stoffen mit überkritischem Kohlendioxid ist als solches Stand der Technik. Hierfür bekannte Vorrichtungen können vom Fachmann für die Erfindung eingesetzt werden und brauchen daher hier nicht näher erläutert zu werden.

Durch die Extraktion mit überkritischem Kohlendioxid (CO₂) wird das zu behandelnde und zu zerkleinernde Material für das nachfolgende Schockwellenverfahren konditioniert und gereinigt. In dem Material vorhandene, chemisch nicht fest eingebundene Additive werden herausgelöst, d.h. extrahiert. Hierzu zählen zahlreiche Weichmacher, Lichtschutzmittel, Stabilisatoren, Farbstoffe, Gleitmittel, Trennmittel und viele andere mehr. Häufig sind die Feststoffbauteile durch ihren Gebrauch mit Fremdstoffen belastet, die dem Grundmaterial für eine Wiederverwendung ohnedies entzogen werden müssten. Diese Stoffe werden, da nicht fest eingebunden, in der Extraktionsstufe nach der Erfindung von vorneherein mit entfernt. Das Verfahren verbessert daher die Wiederverwertungsmöglichkeiten für die gewonnenen Feststoffmehle erheblich.

Wegen der zuvor durchgeführten Extraktion kann die nachfolgende Schockwellenbehandlung energieeffizienter durchgeführt werden. Die tiefen Versprödungstemperaturen sind nicht mehr zwingend erforderlich, es kann bei weniger tiefen Temperaturen bis hin zu Raumtemperatur gearbeitet werden. Die zu wählende Temperatur hängt von der Behandlungsaufgabe und dem eingesetzten fluiden Medium (dem Dielektrikum und Stoßwellenübertragungsmedium bzw. der Prozessflüssigkeit) ab.

Als fluides dielektrisches Medium wird Wasser, eine organische Flüssigkeit oder überkritisches Kohlendioxid verwendet. Die organische Flüssigkeit kann bevorzugt ein Kohlenwasserstoff, ein Keton, wie beispielsweise Aceton oder ein Alkohol sein, vorzugsweise Methanol, Ethanol, Propanol, Isopropanol oder höhere Alkohole. Der Alkohol kann auch ein Polyol sein, insbesondere ein Glykol, wie Ethylenglykol oder Propylenglykol, allgemein ein Diol oder ein Triol, bei letzterem vorzugsweise Glycerin. Ferner kommen Kohlenwasserstoffe, beispielsweise Hexan, Heptan, Cyclohexan, Xylol, Benzol, Toluol, etherische Lösungsmittel, wie zum Beispiel Dioxan, Diisopropylether, Tetrahydrofuran, oder chlorierte Kohlenwasserstoffe, wie insbesondere Chloroform, Dichlormethan, Tetrachlorkohlenwasserstoff oder Dichlorethylen in Frage. Das dielektrische Medium kann ein Flüssigkeitsgemisch sein.

Eine Extraktion mit anderen Mitteln als CO₂, vorzugsweise organischen Extraktionsmitteln vor der Schockwellenbehandlung könnte nahe liegen, da dann Extraktionsmittel und dielektrisches Medium gleich gewählt werden könnten, was verschiedene Vorteile mit sich brächte. Tatsächlich wäre die Verwendung eines solchen Extraktionsmittels jedoch nachteilig, da es das Polymer bzw. Elastomer vor der Schockwellenbehandlung weich machen würde. Es müssten dann noch tiefere Temperaturen eingesetzt werden als im Stand der Technik.

Gerade die erfindungsgemäße Kombination aus einer vorgeschalteten Extraktion mit überkritischem CO₂ und einer Schockwellenbehandlung in CO₂, Wasser oder organischer Flüssigkeit ergibt die erfindungsgemäßen Vorteile.

Vorzugsweise wird die Schockwellenbehandlung innerhalb des erfindungsgemäßen Verfahrens bei einer Temperatur zwischen - 80 °C und + 50 °C durchgeführt.

Gemäß einem möglichen Ausführungsbeispiel wird sowohl die Extraktion wie auch die Schockwellenbehandlung mit überkritischem Kohlendioxid durchgeführt. Dies ermöglicht es, die Ströme von Extraktionsmittel und fluidem Schockwellenmedium zu verbinden. Die Verwendung (und teilweise Entsorgung) organischer Flüssigkeiten wird vermieden.

Besonders bevorzugt ist es auch, wenn das Extraktionsmedium und/oder das dielektrische Medium gereinigt und zurückgeführt werden. Die Reinigungsvorgänge können prozesstechnisch verbunden werden.

In einem Aspekt der Erfindung ist vorgesehen, dass die Extraktion und die Schockwellenbehandlung unmittelbar aufeinander folgen. Zwischenschritte sind nicht erforderlich. Für den Fall, dass beides mit überkritischem Kohlendioxid durchgeführt wird, können die Prozessparameter (Druck, Temperatur) für das Extraktionsmittel und das Schockwellenmedium identisch eingestellt werden, so dass die Überführung der zu behandelnden Stoffe und die Verbindung der Prozesskreisläufe zwischen Extraktion und Schockwellenbehandlung vereinfacht wird.

Nach einem weiteren Aspekt der Erfindung erfolgt zwischen Extraktion und Schockwellenbehandlung eine spontane Entspannung des Kohlendioxids.

Das Stückgut sollte vor der Extraktion mechanisch grob zerkleinert werden, soweit dies erforderlich ist. Bereits feinteilig angeliefertes Stückgut braucht nicht weiter vorbehandelt zu werden. Vorbehandlungsschritte, wie zum Beispiel eine Vorreinigung oder Entstaubung des Materials, sind jedoch grundsätzlich nicht ausgeschlossen.

Nach einem weiteren besonderen Aspekt der Erfindung wird das Produkt der Schockwellenbehandlung einer Nachbehandlung unterzogen. Die Nachbehandlung kann beispielsweise eine Oberflächenkonditionierung, z.B. eine Plasmabehandlung, sein. Die Nachbehandlung kann auch in einer Sichtung oder Klassifizierung der Teilchen bestehen. Es kann sich um eine physikalische oder um eine chemische Nachbehandlung handeln.

Die Nachbehandlung richtet sich nach der geplanten Weiterverwertung des Feststoffmehls. Im Rahmen dieser Erfindung ist eine Nachbehandlung mit einer chemischen Funktionalisierung der Feststoffmehl-Polymere besonders bevorzugt. Gemäß einem besonders bevorzugten Aspekt wird eine Oberflächenfunktionalisierung der Partikel vorgesehen, wie sie dem Fachmann grundsätzlich bekannt ist. In besonders bevorzugten Ausführungsformen erfolgt die Funktionalisierung mit OH-Gruppen (Hydroxylgruppen), Amingruppen, Amidgruppen, Halogengruppen, Sauerstoffsäuregruppen, insbesondere -COOH oder Säurehalogenidgruppen. Gemischte Funktionalisierungen mit chemisch verschiedenen Gruppen können ebenfalls durchgeführt werden.

Die Verfahren für die chemische Funktionalisierung sind dem Fachmann auf dem einschlägigen Gebiet geläufig und brauchen daher hier nicht weiter ausgeführt zu werden. Die oberflächliche Halogenierung von Polymeren ist beispielsweise radikalisch mit Hilfe elementaren Halogens möglich. Besonders bevorzugt ist die Bromierung mit Br₂. Das bromierte Polymer kann anschließend derivatisiert bzw. gepfropft werden. Dabei lässt sich das oberflächlich gebundene Brom leicht mit nucleophilen Reagenzien substituieren. Die Polymerhalogenierung folgt beispielsweise der allgemeinen Formel

Polymer-H + Hal₂ → Polymer-Hal + HHal (I),

mit Hal=Cl, Br

Die Reaktion erfolgt radikalisch (Halogenspaltung zu Radikalen) und kann unter anderem photochemisch oder plasmachemisch initialisiert werden. Als Halogen-Radikalquelle können auch Bromoform, tert.-Butylbromid, Allylbromid oder die entsprechenden Chlorverbindungen eingesetzt werden.

Für die direkte Einführung von Amingruppen an der Polymeroberfläche bietet sich auch die Behandlung mit Amoniak oder Allylamin an. Dies kann wiederum im Plasma erfolgen.

Für die Pfropfung oberflächenhalogenierter Polymere können zum Beispiel Alkohole, Amine, Thiole u.a.m. eingesetzt werden, z.B. HO-R-OH, H₂N-R-NH₂, HS-R-SH, mit R = Alkylen ((CH₂)ₙ), Phenyl und Phenylen ((C₆H₄)ₙ), oder Ether und Polyether ((CH₂)ₘO)ₙ), mit m = 2 bis 4 und n = 1 bis 10. Diese Auswahl ist beispielhaft. Dem Fachmann stehen zahlreiche weitere Verfahren zur Oberflächenfunktionalisierung und -derivatisierung bzw. -pfropfung zur Verfügung.

Das erfindungsgemäße Verfahren liefert Produkte in partikulärer Form mit einer relativ einheitlichen Größenverteilung. Durch Einstellen u.a. der Parameter zugeführte Energie, Behandlungsdauer, Vorzerkleinerungsgrad können die erhaltenen Korngrößen und Verteilungsgrade beeinflusst werden. Im Allgemeinen sind Korngrößen unter 30 µm gut reproduzierbar, vorzugsweise werden für bestimmte Anwendungsfälle Teilchengrößen bis nur 100 nm eingestellt und erhalten.

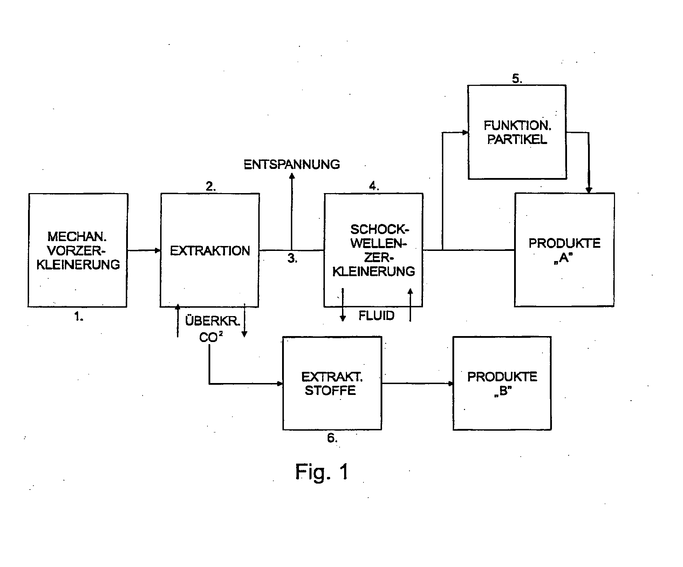

Im Weiteren wird die Erfindung anhand eines in der Figur gezeigten Ablaufschemas näher erläutert.

Das Verfahren startet in diesem Beispiel mit einer mechanischen Vorzerkleinerung **1** des elastomeren, insbesondere gummielastischen, oder thermoplastischen Stückguts. Bei der Vorzerkleinerung wird generell angestrebt, die Teilchengröße unter maximal 5 cm Durchmesser, vorzugsweise unter 1 cm Durchmesser (bzw. längste Teilchenausdehnung) zu bringen. Dabei kann es sich um ein Schreddern oder Zerschneiden, ein Brechen (insbesondere bei Mischmaterialien, die nicht nur Elastomere enthalten) oder ein Mahlen in einer Mühle handeln. Bevorzugt können hier beispielsweise technische Schläuche oder Altreifen (Mäntel, schlauchlose abgezogene Reifen) geschreddert werden. Die Vorzerkleinerung hängt selbstverständlich stark von der Natur der wieder zu verwertenden Bauteile ab. Das geschredderte oder gemahlene Material wird sodann in eine Extraktionsstufe **2** überführt. Hier erfolgt die Extraktion erfindungsgemäß mit überkritischem Kohlendioxid in einem dafür geeigneten Extraktor. Die Temperatur kann eingestellt werden. Nach der Extraktion findet eine Entspannung an Position **3** statt, Der Überdruck aus der Extraktionsstufe wird hier reduziert oder bis auf Atmosphärendruck abgebaut. Das Ausgangsmaterial besitzt in diesem Verfahrensstadium noch immer seine Anfangs-Partikelgröße, ist jedoch durch den Extraktionsschritt bereits gereinigt und konditioniert. Additive wie Weichmacher, Stabilisatoren, Öle und dergleichen sind entfernt. Anschließend wird das so behandelte Material der Schockwellenzerkleinerung **4** unterzogen. Die Schockwellenbehandlung findet in einem fluiden Medium statt, vorzugsweise in einem Alkohol. Das Fluid wird vorzugsweise im Kreis geführt und vor der Rückführung in die Schockwellenstufe wieder aufgereinigt. Durch die Behandlung mit Schockwellen entsteht ein feinpartikuläres Mehl aus dem behandelten Material. Die Korngröße ist von mehreren Parametern, u.a. der Art des eingesetzten Elastomermaterials, der aufgewendeten Energie und der Dauer der Behandlung abhängig, kann jedoch gut auf den gewünschten Bereich unter 30 µm eingestellt werden. Im Anschluss an die Schockwellenzerkleinerung **4** kann ein erstes Produkt A abgezogen werden. Zusätzlich oder alternativ wird eine Funktionalisierung der Partikel **5** durchgeführt. Geeignete Verfahren zur Oberflächenfunktionalisierung der erhaltenen Partikel sind dem Fachmann bekannt und brauchen hier nicht näher ausgeführt zu werden. Erhalten werden veredelte Produkte A.

Das aus der Extraktionsstufe **2** austretende überkritische CO₂ führt die aus dem Ausgangsmaterial extrahierten Stoffe mit sich. Diese werden in der Verfahrensstufe 6 in einem Behälter oder Reaktor bei Entspannung des überkritischen CO₂s abgeladen. Der CO₂-Extrakt ist rückstandsfrei bezüglich des Extraktionsmittels und kann direkt verwertet oder weiter aufgetrennt werden. Man erhält verschiedene mögliche Produkte B.

## Patentansprüche

1. Verfahren zum Zerkleinern elastomerer und thermoplastischer Feststoffe in Form von Stückgut, auch im Verbund mit anderen Materialien, **dadurch gekennzeichnet, dass** das Stückgut einer Extraktion mit überkritischem Kohlendioxid unterzogen wird, und dass das so behandelte Stückgut anschließend einer Schockwellenbehandlung mit durch Hochspannung ausgelösten Schockwellen in fluidem dielektrischen Medium unterzogen wird, wobei das Medium Wasser, eine organische Flüssigkeit mit Fp. unter -20 °C oder überkritisches Kohlendioxid ist.

2. Verfahren nach Anspruch 1, **dadurch gekennzeichnet, dass** das Schockwellenverfahren bei einer Temperatur zwischen - 80 °C und + 50 °C durchgeführt wird.

3. Verfahren nach Anspruch 1 oder 2, **dadurch gekennzeichnet, dass** die extrahierten Stoffe aus dem Extraktionsmedium rückgewonnen werden und dass der Extrakt insgesamt, wenigstens eine Fraktion des Extrakts oder wenigstens ein aus dem Extrakt erhaltener Reinstoff ein Produkt des Verfahrens bildet.

4. Verfahren nach einem der Ansprüche 1 bis 3, **dadurch gekennzeichnet, dass** das Extraktionsmedium und/oder das dielektrische Medium gereinigt und zurückgeführt werden.

5. Verfahren nach einem der Ansprüche 1 bis 4, **dadurch gekennzeichnet, dass** Extraktion und Schockwellenbehandlung unmittelbar aufeinander folgen.

6. Verfahren nach einem der Ansprüche 1 bis 5, **dadurch gekennzeichnet, dass** zwischen Extraktion und Schockwellenbehandlung eine spontane Entspannung stattfindet.

7. Verfahren nach einem der Ansprüche 1 bis 6, **dadurch gekennzeichnet, dass** das Stückgut vor der Extraktion mechanisch grob zerkleinert wird.

8. Verfahren nach einem der Ansprüche 1 bis 7, **dadurch gekennzeichnet, dass** das Produkt der Schockwellenbehandlung einer Nachbehandlung unterzogen wird.

9. Verfahren nach Anspruch 8, **dadurch gekennzeichnet, dass** die Nachbehandlung eine chemische Funktionalisierung der Feststoff-Polymere aus dem Ausgangsmaterial umfasst.

## Claims

1. Process for the comminution of elastomeric and thermoplastic solids in the form of individual pieces of material, including those bonded to other materials, **characterized in that** the individual pieces of material are subjected to extraction with supercritical carbon dioxide, and the individual pieces of material thus treated are then subjected to a shock wave treatment in a fluid dielectric medium, using shock waves initiated via high voltage, where the medium is water, an organic liquid with freezing point below -20°C or supercritical carbon dioxide.

2. Process according to Claim 1, **characterized in that** the temperature at which the shock wave process is carried out is from -80°C to +50°C.

3. Process according to Claim 1 or 2, **characterized in that** the extracted substances are reclaimed from the extraction medium, and that the entire extract, at least a fraction of the extract, or at least one pure substance obtained from the extract forms a product of the process.

4. Process according to any of Claims 1 to 3, **characterized in that** the extraction medium and/or the dielectric medium is/are purified and reintroduced.

5. Process according to any of Claims 1 to 4, **characterized in that** extraction and shock wave treatment follow one another directly.

6. Process according to- any of Claims 1 to 5, **characterized in that** spontaneous depressurization takes place between extraction and shock wave treatment.

7. Process according to any of Claims 1 to 6, **characterized in that**, before the extraction process, the individual pieces of material are subjected to coarse mechanical comminution.

8. Process according to any of Claims 1 to 7, **characterized in that** the product of the shock wave treatment is subjected to a post-treatment.

9. Process according to Claim 8, **characterized in that** the post-treatment comprises chemical functionalization of the solid polymers from the starting material.

## Revendications

1. Procédé pour le broyage de matières solides élastomères et thermoplastiques sous la forme de pièces individuelles, également en association avec d'autres matériaux, **caractérisé en ce que** les pièces individuelles sont soumises à une extraction avec du dioxyde de carbone surcritique, et **en ce que** les pièces individuelles ainsi traitées sont ensuite soumises à un traitement par ondes de choc avec des ondes de choc déclenchées par une haute tension dans un milieu diélectrique fluide, dans lequel le milieu est de l'eau, un liquide organique avec un Fp au-dessous de -20° C, ou du dioxyde de carbone surcritique.

2. Procédé selon la revendication 1, **caractérisé en ce que** la procédure de traitement par ondes de choc est exécutée à une température entre -80° C et +50° C.

3. Procédé selon la revendication 1 ou 2, **caractérisé en ce que** les matériaux extraits sont récupérés hors du milieu d'extraction, et **en ce que** l'extrait dans sa totalité, au moins une fraction de l'extrait ou au moins un matériau pur obtenu à partir de l'extrait, forme un produit du procédé.

4. Procédé selon l'une des revendications 1 à 3, **caractérisé en ce que** le milieu d'extraction et/ou le milieu diélectrique est purifié est recyclé.

5. Procédé selon l'une des revendications 1 à 4, **caractérisé en ce que** l'extraction et le traitement par ondes de choc se suivent directement.

6. Procédé selon l'une des revendications 1 à 5, **caractérisé en ce qu'**une détente spontanée a lieu entre l'extraction et le traitement par ondes de, choc.

7. Procédé selon l'une des revendications 1 à 6, **caractérisé en ce que** les pièces individuelles sont grossièrement broyées mécaniquement avant l'extraction.

8. Procédé selon l'une des revendications 1 à 7, **caractérisé en ce que** le produit du traitement par ondes de choc est soumis à un traitement successif.

9. Procédé selon la revendication 8, **caractérisé en ce que** le traitement successif inclut une fonctionnalisation chimique une fonctionnalisation chimique des polymères solides du matériau de départ.
